# EUROPÄISCHE PATENTSCHRIFT

(11) **EP 1 932 810 B1**
(45) Veröffentlichungstag und Bekanntmachung des Hinweises auf die Patenterteilung: **08.08.2012**
(21) Anmeldenummer: 07450231.1
(22) Anmeldetag: 11.12.2007
(51) Int. Cl.: C02F 11/12

(54) **Vorrichtung zum Entwässern von Klärschlamm**
Apparatus for dewatering wastewater sludge
Dispositif de déshydratation de boues d'épuration

(30) Priorität: 12.12.2006 AT 20492006
(43) Veröffentlichungstag der Anmeldung: 18.06.2008
(73) Patentinhaber: Rothmaier GmbH & Co. KG, 4942 Gurten (AT)
(72) Erfinder: Rothmaier, Thomas, 4942 Gurten (AT)
(74) Vertreter: Hübscher, Helmut

(56) Entgegenhaltungen:
- DE-A1- 2 107 837
- FR-A- 2 822 720
- US-B1- 7 186 390

## Beschreibung

Die Erfindung bezieht sich auf eine Vorrichtung zum Entwässern von Klärschlamm mit wenigstens einem den Klärschlamm aufnehmenden Behälter, der einen Siebeinsatz aufweist und an einen Trübwasserablauf angeschlossen ist.

Um entwässerten Klärschlamm zu trocknen, ist es bekannt, diesen Klärschlamm auf einem Aufnahmeboden aufzutragen und mit Hilfe einer Wendehaspel aufzulockern, die über den Aufnahmeboden verfahren wird. Mit Hilfe dieser Wendehaspel wird nicht nur eine gleichmäßige Schlammschicht erreicht, sondern auch eine Förderung des Klärschlammes vorgenommen, weil mit der Umsetzung und Wendung des Klärschlammes eine Förderung verbunden ist. Dies hat den Vorteil, daß der nach seiner Entwässerung feuchte Klärschlamm auf einer Aufgabeseite auf den Aufnahmeboden aufgebracht und der getrocknete Klärschlamm auf der gegenüberliegenden Austragsseite ausgetragen werden kann. Voraussetzung ist allerdings, daß entsprechend entwässerter Klärschlamm zur Verfügung steht. Zur Entwässerung werden üblicherweise Filterpressen eingesetzt, die den Nachteil einerseits eines entsprechenden Konstruktionsaufwandes und anderseits eines stoßweise anfallenden Trübwassers haben, wobei die darin enthaltene Schadstofffracht die Aufnahmekapazität einer Kläranlage häufig übersteigt.

Zur Entwässerung von Klärschlamm ist es darüber hinaus bekannt (DE 197 15 084 A1) Filterbehälter einzusetzen, die einen Siebeinsatz aufweisen, so daß das Trübwasser über den Siebeinsatz abgeleitet werden kann, während der Klärschlamm zurückgehalten wird. Der entwässerte Klärschlamm kann mit einer Förderschnecke ausgetragen werden. Zur Verbesserung der Entwässerungsleistung wird der Filterbehälter mit Hilfe wenigstens eines Unwuchtmotors in Schwingungen versetzt. Der Konstruktionsaufwand ist im Vergleich zu Filterpressen verringert, doch fällt wiederum das abzuleitende Trübwasser in vergleichsweise großen Mengen an, weil es darum geht, mit einer möglichst guten Entwässerungsleistung zu arbeiten.

Der Erfindung liegt somit die Aufgabe zugrunde, eine einfache Entwässerung für den Klärschlamm zu gewährleisten, so daß der Klärschlamm vorteilhaft weiterbehandelt werden kann, ohne einen stoßartigen Anfall des Trübwassers in größeren Mengen in Kauf nehmen zu müssen.

Ausgehend von einer Vorrichtung zum Entwässern von Klärschlamm der eingangs geschilderten Art löst die Erfindung die gestellte Aufgabe dadurch, daß der einem Aufnahmeboden für den entwässerten Klärschlamm vorgeschaltete, trogförmige Behälter um eine zu seiner Längsachse parallele Kippachse zwischen einer Arbeitsstellung und einer Entleerungsstellung verschwenkbar ist und mit dem Siebeinsatz im Bereich einer Seitenwand eine Schurre bildet, die in der Entleerungsstellung des trogförmigen Behälters unter einem den Schüttwinkel des entwässerten Klärschlammes übersteigenden Neigungswinkel zum Aufnahmeboden abfällt.

Da zufolge dieser Maßnahmen der Behälter einem Aufnahmeboden für den entwässerten Klärschlamm vorgeschaltet wird, kann die Entwässerung auf eine Klärschlammenge bezogen werden, wie sie zur Speisung der schrittweise entlang des Aufnahmebodens geförderten Klärschlammschicht benötigt wird. Dies bedeutet, daß die Entwässerung schwerkraftsbedingt erfolgen kann, so daß aufgrund der begrenzten Menge an zu entwässerndem Klärschlamm Trübwasser in einer vergleichsweise geringen Menge im wesentlichen kontinuierlich anfällt, so daß die Rückführung dieses Trübwassers in eine Kläranlage keine Schwierigkeiten bereitet. Damit der chargenweise entwässerte Klärschlamm entsprechend den Förderschritten des entwässerten Klärschlammes auf der Aufgabeseite dem Aufnahmeboden zugeführt werden kann, wird der der Entwässerung dienende Behälter trogförmig ausgebildet und um eine zu seiner Längsachse parallele Kippachse schwenkbar gelagert, um den entwässerten Klärschlamm über die Breite des Aufnahmebodens aus einem oder mehreren über die Breite des Aufnahmebodens hintereinandergereihten Behältern auf den Aufnahmeboden entleeren zu können. Eine einfache und vollständige Entleerung des Behälters kann allerdings nur dann sichergestellt werden, wenn der Siebeinsatz im Bereich einer der Aufgabeseite des Aufnahmebodens zugekehrten Seitenwand des Behälters eine Schurre bildet, die über den Schüttwinkel des entwässerten Klärschlammes hinaus aufgekippt werden kann, so daß der entwässerte Klärschlamm über diese Schurre auf den Aufnahmeboden gleitet und anschließend von der Wendehaspel erfaßt werden kann.

Besonders vorteilhafte Entleerungsbedingungen ergeben sich, wenn die Kippachse des trogförmigen Behälters im Bereich des Abwurfrandes der Schurre verläuft, weil in diesem Fall der für eine vollständige Entleerung des Behälters erforderliche Kippwinkel für die Schurre ohne weiteres erreicht werden kann, ohne den für die Aufnahme des abgeworfenen Klärschlammes benötigten Raum auf der Aufgabeseite des Aufnahmebodens zu beeinträchtigen.

Besonders einfache Konstruktionsverhältnisse ergeben sich für den Siebeinsatz, wenn er aus einem Lochblech und einem darauf aufliegenden Seihband aufgebaut wird, das das Siebverhalten des Siebeinsatzes bei der Entwässerung des Klärschlammes bestimmt, während das Lochblech lediglich eine Trägerfunktion übernimmt. Da das Seihband einem Verschleiß unterworfen ist, empfiehlt es sich, für dieses das Lochblech abdeckende Seihband eine Halterung vorzusehen, die ein einfaches Auswechseln des Seihbandes erlaubt. Zu diesem Zweck kann das um die Längsränder des trogförmigen Behälters umgeschlagene Seihband an der Außenseite des Behälters festgeklemmt und im tiefsten Bodenbereich des im Querschnitt vorzugsweise V-förmigen Behälters mittels wenigstens einer Haltestange gehalten werden, die wenigstens zwei schraubverstellbar gelagerte, durch Löcher des Lochbleches greifende Riegelwinkel aufweist. Werden die Riegelwinkel in eine zueinander parallele Lage gedreht, so können sie durch das Seihband hindurch in Durchtrittslöcher des Lochbleches eingeführt werden, um dann nach einer Verdrehung das Lochblech zu hintergreifen und die Haltestange gegenüber dem Lochblech zu verriegeln. Die Schraubverstellung erlaubt dabei einen Spielausgleich, so daß das Seihband zwischen der Haltestange und dem tiefsten Bodenbereich des trogförmigen Behälters festgeklemmt wird und beim Entleeren des Behälters nicht vom Boden abheben kann.

In der Zeichnung ist der Erfindungsgegenstand beispielsweise dargestellt. Es zeigen
- Fig. 1: eine erfindungsgemäße Vorrichtung zum Entwässern von Klärschlamm in einer vereinfachten, zum Teil aufgerissenen Draufsicht,
- Fig. 2: einen Schnitt nach der Linie II - II der Fig. 1 in einem größeren Maßstab,
- Fig. 3: eine der Fig. 2 entsprechende Darstellung der erfindungsgemäßen Vorrichtung, jedoch in der Entleerungsstellung, und
- Fig. 4: den Behälterboden ausschnittsweise in einem Querschnitt in einem größeren Maßstab.

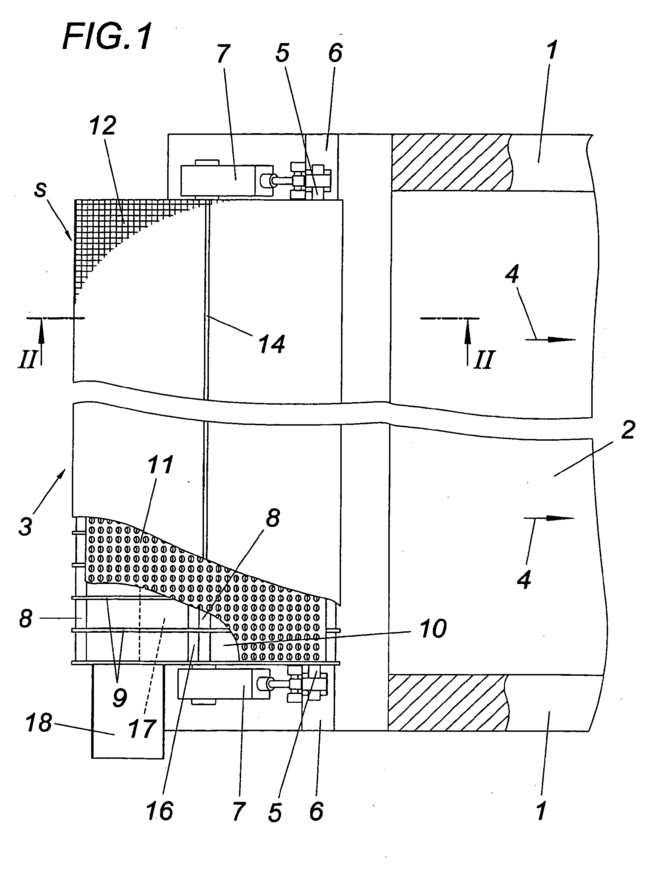

Wie der Fig. 1 entnommen werden kann, ist einem durch Seitenwände 1 begrenzten Aufnahmeboden 2 für entwässerten Klärschlamm eine Vorrichtung zum Entwässern des Klärschlammes vorgeschaltet. Diese Vorrichtung umfaßt im wesentlichen einen trogförmigen Behälter 3, der sich über die Breite des Aufnahmebodens 2 erstreckt. Dieser Behälter 3 könnte aber auch in hintereinandergereihte Einzelbehälter aufgeteilt werden, weil es lediglich darauf ankommt den entwässerten Klärschlamm aus dem Behälter 3 oder den allenfalls vorgesehenen Einzelbehältern über die Breite des Aufnahmebodens 2 auf diesen zu entleeren, um den entleerten Klärschlamm in an sich bekannter Weise mit Hilfe einer sich zwischen den Seitenwänden erstreckenden Wendehaspel zu erfassen und unter einem Wenden und Auflockern schrittweise von der Aufgabeseite in Förderrichtung 4 zu einer Austragseite des Aufnahmebodens 2 zu transportieren, wobei die Aufeinanderfolge der Förderschritte in Abhängigkeit von der zur Verfügung stehenden Länge des Aufnahmebodens, der eingetragenen thermischen Energie, insbesondere Sonnenenergie, und vom angestrebten Restfeuchtigkeitsgehalt gewählt wird. Anstatt einer Wendehaspel könnte unter Umständen auch eine andere Fördereinrichtung vorgesehen werden.

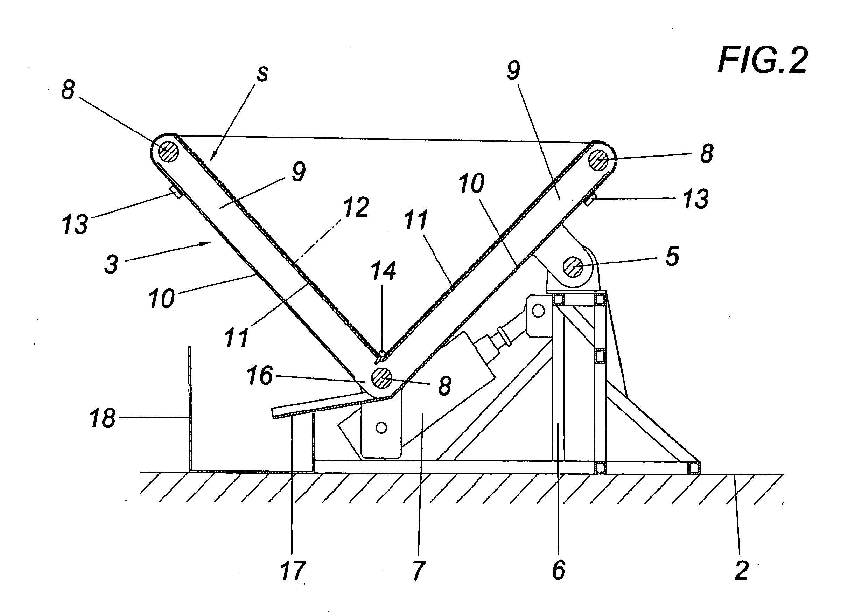

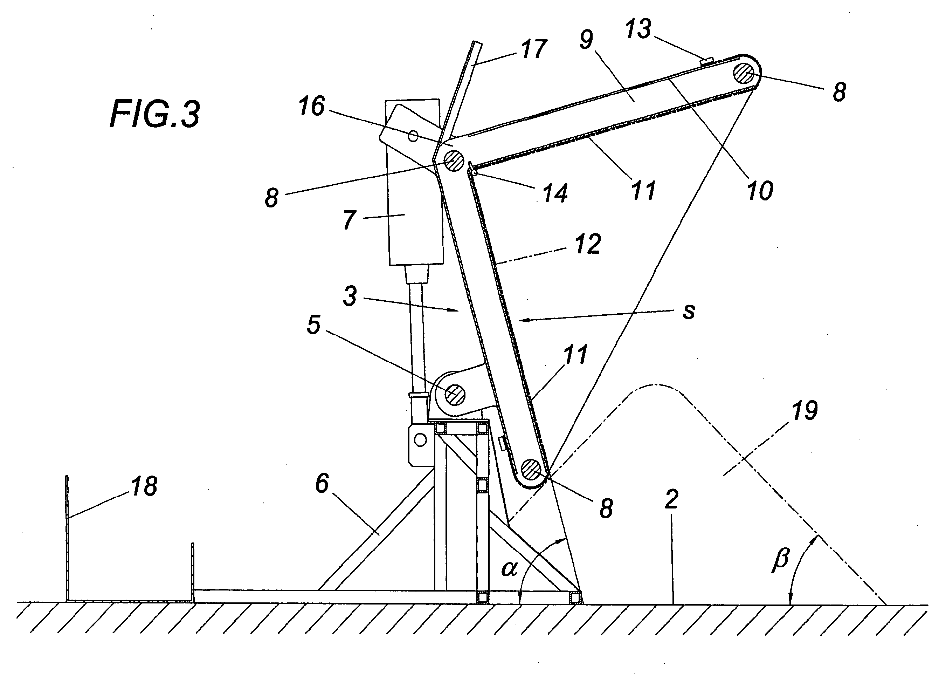

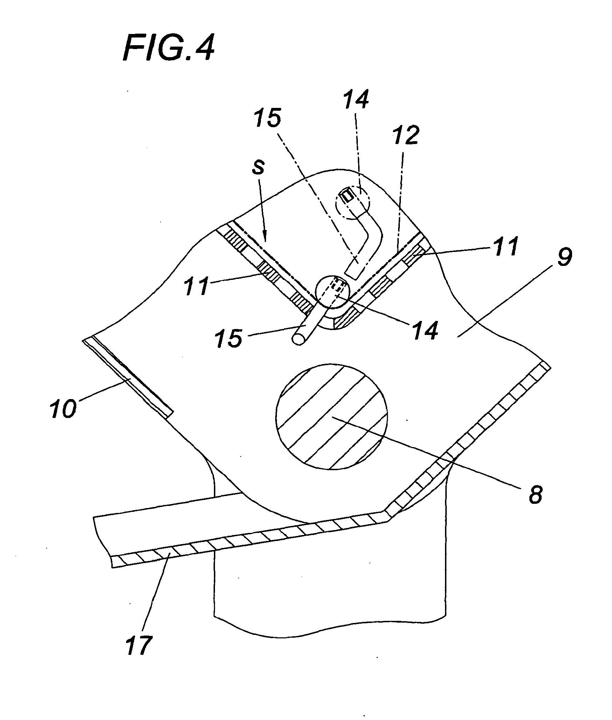

Der Behälter 3 ist um eine zu seiner Längsachse parallele Kippachse 5 in einem Gestell 6 drehbar gelagert und kann mit Hilfe eines Schwenktriebes 7, beispielsweise eines zwischen dem Gestell 6 und dem Behälter 3 angelenkten Schwenkzylinders, zwischen einer in der Fig. 2 dargestellten Arbeitsstellung und einer in der Fig. 3 gezeigten Entleerungsstellung verschwenkt werden. Der vorzugsweise im Querschnitt V-förmige Behälter 3 weist ein tragendes Gestell auf, das durch Längsholme 8 verbunden Stegbleche 9 umfaßt, die auf ihrer Außenseite die Seitenwände 10 und auf ihrer Innseite Lochbleche 11 tragen, die durch ein Seihband 12 abgedeckt werden. Das Seihband 12 ist über die Längsränder des Behälters 3 umgeschlagen und an den Seitenwänden 10 mit Hilfe von Klemmleisten 13 auswechselbar befestigt. Im tiefsten Bodenbereich des Behälters 3, also im Verbindungsbereich der beiden zueinander V-förmig verlaufenden Lochbleche 11, wird das Seihband 12 zusätzlich durch wenigstens eine Haltestange 14 am Behälterboden festgehalten. Die Haltestange 14 ist zu diesem Zweck gemäß der Fig. 4 mit wenigstens zwei Riegelwinkeln 15 versehen, die schraubverstellbar in der Haltestange 14 gelagert sind. In der strichpunktiert dargestellten Parallellage der beiden Riegelwinkel 15 können diese durch das Seihband 12 hindurch in je ein Loch eines Lochbleches 11 eingeführt und dann zur Verriegelung verdreht werden, wobei aufgrund der Schraubverstellung ein zusätzlicher Spielausgleich stattfindet, so daß das Seihband 12 zwischen der Haltestange 14 und wenigstens einem der Lochbleche 11 festgeklemmt wird.

Das Seihband 12 mit den es tragenden Lochblechen 11 bildet somit einen Siebeinsatz s für den vom Behälter 3 aufgenommenen, zu entwässernden Klärschlamm, wobei das durch das Seihband 12 abfließende Trübwasser entlang der Seitenwände 10 des Behälters 3 in den tiefsten Bodenbereich zu einer vorzugsweise über die Behälterlänge durchgehenden Abflußöffnung 16 fließt, an die sich ein Leitblech 17 anschließt, das in der Arbeitsstellung des Behälters nach der Fig. 2 in einen dem Gestell 6 zugehörigen, rinnenförmigen Trübwasserablauf 18 mündet. Der in den trogförmigen Behälter 3 eingebrachte Klärschlamm kann daher zwischen den einzelnen Förderschritten des bereits auf den Aufnahmeboden 2 aufgebrachten Klärschlammes schwerkraftbedingt, also statisch, entwässert werden, um nach jedem Förderschritt, der mit einem Austrag eines bereits getrockneten Teils des auf den Aufnahmeboden 2 aufgebrachten Klärschlammschicht verbunden ist, die Klärschlammschicht auf dem Aufnahmeboden 2 durch ein Entleeren des Behälters 3 um die ausgetragene Klärschlammenge zu ergänzen. Zu diesem Zweck wird der Behälter 3 um seine Kippachse 5 in die Entleerungsstellung geschwenkt. In dieser Entleerungsstellung bildet der Siebeinsatz s auf der dem Aufnahmeboden 2 zugekehrten Seitenwand 10 eine Schurre für den entwässerten Klärschlamm, der somit entlang dieser Schurre auf den Aufnahmeboden 2 abgeworfen wird, wie dies in der Fig. 3 durch die strichpunktiert angedeutete Klärschlammschüttung 19 angedeutet ist. Diese Schüttung wird beim nachfolgenden Verfahren der Wendewalze entlang des Aufnahmebodens 2 erfaßt und unter einer gleichmäßigen Verteilung um einen Förderschritt weitergefördert, so daß Platz für eine neue Charge entwässerten Klärschlamms geschaffen wird.

Um eine vollständige Entleerung des Behälters 3 zu erreichen, wird der Schwenkwinkel um die Kippachse 5 so groß gewählt, daß das im Ausführungsbeispiel die Schurre des Siebeinsatzes s bildende Lochblech 11 gegenüber dem Aufnahmeboden 2 einen Neigungswinkel α größer als der Schüttwinkel β des entwässerten Klärschlammes aufweist. Zum Reinigen des Seihbandes von anhaftenden Klärschlammresten, können selbstverständlich zusätzliche Maßnahmen getroffen und beispielsweise Reinigungsdüsen für ein Spülmittel vorgesehen werden.

## Patentansprüche

1. Vorrichtung zum Entwässern von Klärschlamm mit wenigstens einem den Klärschlamm aufnehmenden Behälter (3), der einen Siebeinsatz (s) aufweist und an einen Trübwasserablauf (18) angeschlossen ist, **dadurch gekennzeichnet, daß** der einem Aufnahmeboden (2) für den entwässerten Klärschlamm vorgeschaltete, trogförmige Behälter (3) um eine zu seiner Längsachse parallele Kippachse (5) in einem Gestell (6) drehbar gelagert und mit Hilfe eines Schwenktriebes (7) zwischen einer Arbeitsstellung und einer Entleerungsstellung verschwenkbar ist und mit dem Siebeinsatz (s) im Bereich einer Seitenwand (10) eine Schurre bildet, die in der Entleerungsstellung des trogförmigen Behälters (3) unter einem den Schüttwinkel des entwässerten Klärschlammes übersteigenden Neigungswinkel zum Aufnahmeboden (2) abfällt.

2. Vorrichtung nach Anspruch 1, **dadurch gekennzeichnet, daß** die Kippachse (5) des trogförmigen Behälters (3) im Bereich des Abwurfrandes der Schurre verläuft.

3. Vorrichtung nach Anspruch 1 oder 2, **dadurch gekennzeichnet, daß** der Siebeinsatz (s) ein Lochblech (11) und ein auf dem Lochblech (11) aufliegendes Seihband (12) aufweist.

4. Vorrichtung nach Anspruch 3, **dadurch gekennzeichnet, daß** das um die Längsränder des trogförmigen Behälters (3) umgeschlagene Seihband (12) an der Außenseite des Behälters (3) festgeklemmt und im tiefsten Bodenbereich des im Querschnitt V-förmigen Behälters (3) mittels wenigstens einer Haltestange (14) gehalten ist, die wenigstens zwei schraubverstellbar gelagerte, durch Löcher des Lochbleches (11) greifende Riegelwinkel (15) aufweist.

## Claims

1. Device for dewatering sewage sludge, having at least one container (3) which receives the sewage sludge, comprises a screen insert (s) and is connected to a sludge liquor outlet (18), **characterised in that** the trough-shaped container (3) which is connected upstream of a receiving base (2) for the dewatered sewage sludge is mounted so as to be able to rotate in a frame (6) about a tilting axis (5) in parallel with its longitudinal axis and can be pivoted with the aid of a pivot drive (7) between an operating position and an emptying position and forms with the screen insert (s) in the region of a sidewall (10) a chute which in the emptying position of the trough-shaped container (3) descends at an angle of inclination, which exceeds the dumping angle of the dewatered sewage sludge, with respect to the receiving base (2).

2. Device as claimed in claim 1, **characterised in that** the tilting axis (5) of the trough-shaped container (3) extends in the region of the discharge edge of the chute.

3. Device as claimed in claim 1 or 2, **characterised in that** the screen insert (s) comprises a perforated plate (11) and a filter belt (12) lying on the perforated plate (11).

4. Device as claimed in claim 3, **characterised in that** the filter belt (12) wrapped around the longitudinal edges of the trough-shaped container (3) is fixedly clamped on the outer side of the container (3) and is held in the deepest base region of the container (3), which is V-shaped in cross-section, by means of at least one holding rod (14) which comprises at least two locking elbows (15) which are mounted in a screw-adjustable manner and engage through holes in the perforated plate (11).

## Revendications

1. Dispositif de déshydratation de boues d'épuration avec au moins un récipient (3) contenant les boues d'épuration qui présente une plaque-filtre (s) et qui est raccordé à une sortie d'eau trouble (18), **caractérisé en ce que** le récipient (3) en forme d'auge, situé en amont d'un sol d'admission (2) pour les boues d'épuration déshydratées, est placé mobile autour d'un axe d'inclinaison (5) parallèle à son axe longitudinal dans un châssis-support (6), est pivotable à l'aide d'une commande de basculement (7) entre une position de travail et une position de vidage et forme avec la plaque-filtre (s), dans la zone d'une paroi latérale (10), une goulotte qui descend vers le sol d'admission (2) dans la position de vidage du récipient (3) en forme d'auge, dans un angle d'inclinaison supérieur à l'angle de déversement de la boue d'épuration déshydratée.

2. Dispositif selon la revendication 1, **caractérisé en ce que** l'axe de d'inclinaison (5) du récipient (3) en forme d'auge passe dans la zone du bord de déchargement de la goulotte.

3. Dispositif selon la revendication 1 ou 2, **caractérisé en ce que** la plaque-filtre (s) présente une tôle perforée (11) et une bande filtrante (12) posée sur la tôle perforée (11).

4. Dispositif selon la revendication 3, **caractérisé en ce que** la bande filtrante (12) rabattue autour des bords longitudinaux du récipient (3) en forme d'auge est serrée au niveau du côté extérieur du récipient (3) et est tenue, dans la zone de fond la plus profonde du récipient (3) en forme de V en section transversale, à l'aide d'au moins une barre de maintien (14) qui présente au moins deux coudes de verrouillage (15) en prise à travers des trous de la tôle perforée (11), placés réglables vissés.
